(19) Europäisches Patentamt

European Patent Office

Office européen des brevets

(11) **EP 0 778 328 B1**

(12) **EUROPÄISCHE PATENTSCHRIFT**

(45) Veröffentlichungstag und Bekanntmachung des Hinweises auf die Patenterteilung:
**09.02.2000  Patentblatt 2000/06**

(51) Int Cl.⁷: **C09K 11/02**, H01J 29/18, C09D 7/12, C09D 11/02, C08K 3/30, C09C 1/04

(21) Anmeldenummer: **96203345.2**

(22) Anmeldetag: **27.11.1996**

(54) **Farbbildschirm mit kontrastverstärkendem Pigment**

Colour picture screen with contrast improving pigment

Ecran d'images en couleurs ayant un pigment améliorant le contraste

(84) Benannte Vertragsstaaten:
**DE FR GB**

(30) Priorität: **09.12.1995  DE 19546011**

(43) Veröffentlichungstag der Anmeldung:
**11.06.1997  Patentblatt 1997/24**

(73) Patentinhaber:
• **Philips Corporate Intellectual Property GmbH**
  **52064 Aachen (DE)**
  Benannte Vertragsstaaten:
  **DE**
• **Koninklijke Philips Electronics N.V.**
  **5621 BA Eindhoven (NL)**
  Benannte Vertragsstaaten:
  **FR GB**

(72) Erfinder:
• **Bredol, Michael, Dr.**
  **Röntgenstrasse 24, 22335 Hamburg (DE)**
• **Merikhi, Jacqueline**
  **Röntgenstrasse 24, 22335 Hamburg (DE)**
• **Wädow, Dieter**
  **Röntgenstrasse 24, 22335 Hamburg (DE)**

(74) Vertreter: **Volmer, Georg, Dipl.-Ing. et al**
**Philips Corporate Intellectual Property GmbH,**
**Habsburgerallee 11**
**52064 Aachen (DE)**

(56) Entgegenhaltungen:
EP-A- 0 491 406       US-A- 4 086 123
US-A- 4 209 567       US-A- 4 339 501

**Beschreibung**

Die Erfindung betrifft einen Farbbildschirm, insbesondere eine Farbbildröhre oder einen Farbmonitor, mit einer Beschichtung, die neben einem blauen mindestens einen grünen und/oder roten Leuchtstoff und mindestens ein kontrastverstärkendes Pigment enthält.

Farbbildschirme und Farbmonitore werden häufig in hellem Umgebungslicht benutzt. Um das Schirmbild bei dieser Beleuchtung besser sichtbar zu machen und die Augen weniger zu ermüden, soll ihr Bildschirm blendungsfrei, reflexionsarm und kontrastreich sein.

Für die Qualität des Bildschirms ist dabei dessen absolute Helligkeit weniger entscheidend als der Kontrast K. Unter dem Kontrast versteht man den Unterschied zwischen der größten und der kleinsten Helligkeit. Der Kontrast errechnet sich aus dem Verhältnis von der Summe von Fremdlichtintensität und Nutzlichtintensität zur Fremdlichtintensität.

$$K = (I_{fremd} + I_{nutz})/I_{fremd}$$

Das Umgebungslicht mit der Intensität $I_{aus}$ wird von der Leuchtstoffschicht zurückgestreut und muß dabei den Weg durch das Bildschirmglas zweimal durchlaufen. Es hat dann die Intensität $I_{fremd} = R_{schirm} \times I_{aus} \times T^2$. Dabei ist $R_{schirm}$ der Reflexionsfaktor der Leuchtstoffschicht, T die Transmission des Bildschirmglases.

Das von den Leuchtstoffpunkten ausgestrahlte Licht mit der Intensität $I_{pix}$ durchläuft das Glas einmal und erzeugt deshalb die Nutzleuchtdichte $I_{nutz} = I_{pix} \times T$. Unter Vernachlässigung von Spiegel- und Streulichtverlusten ergibt sich der Kontrast K in der Praxis zu

$$K = (I_{aus} \times R_{schirm} \times T^2 + I_{pix} \times T) / I_{aus} \, R_{schirm} \times T^2$$

Man kann den Kontrast maximieren, indem man dem Außenlichteinfluß im Vergleich zur Eigenlichtdichte der Leuchtstoffpunkte vermindert. Dazu gibt es mehrere Möglichkeiten. Man kann die Transparenz T des Bildschirmglases senken. Man kann aber auch Farbfilter in Form von anorganischen Pigmentstoffen einsetzen, die so ausgewählt werden, daß sie die vom jeweiligen Leuchtstoff emittierte Farbe möglichst durchlassen und die restlichen Spektralanteile absorbieren, sodaß die diffuse Reflexion des Außenlichtes durch Reduktion von $R_{schirm}$ an dem Leuchtstoffpulver unterdrückt wird.

Der erreichbare Kontrastgrad hängt in hohem Maße von der spektralen Reflexion des Pigmentes ab, die auf die Emissionseigenschaften des zugehörigen Leuchtstoffes abgestimmt sein muß. Deshalb kommt dem Reflexionsvermögen bei der Wahl geeigneter Pigmente eine große Bedeutung zu. Neben dem speziellen Reflexionsvermögen müssen für die Auswahl geeigneter Pigmente auch noch zahlreiche andere Eigenschaften in Betracht gezogen werden. So soll beispielsweise das Pigment keine toxischen Elemente, wie Cadmium, Blei und Quecksilber enthalten. Ferner darf das Pigment nicht wasserlöslich sein, da der Leuchtstoff in Form einer Suspension auf die Stirnfläche der Farbbildröhre aufgetragen wird. Schließlich ist auch noch die Temperaturbeständigkeit von wesentlicher Bedeutung, da die die Leuchtstoffe enthaltenden Suspensionen zum Ausbrennen der in den Suspensionen enthaltenen Bindemittel bei etwa 450°C gesintert werden. Selbstverständlich darf das Pigment beim Sintern auch nicht schmelzen oder eine Farbveränderung erfahren. Für den Betrieb der Farbbildröhre muß das Pigment vakuumbeständig und elektronenstrahlresistent sein.

Kontrastverbessernde Pigmentierungen für die roten und blauen Leuchtstoffe in Farbbildschirmen sind wohlbekannt. Aus der DE-A- 2850491 ist eine mit einem roten Pigment beschichtete Farbbildschirmsubstanz bekannt, die aus einem auf einem Seltenerdelement basierenden und durch Europium aktivierten Farbbildschirmsubstanzkörper und einem aus Indiumsulfid oder einer Kombination aus Indiumsulfid und einem Alkalisulfid gebildetem Pigment besteht. Die Pigmentierung der grünen Leuchtstoffe hat sich bisher noch nicht in die Praxis eingeführt. Dies erklärt sich dadurch, daß bei der Verwendung von absorbierenden Pigmenten in Verbindung mit grünemittierenden Leuchtstoffen das Abfallen der Grünleuchtdichte wesentlich schneller verstärkt wird als das Abfallen im spezifischen Reflexionsvermögen, sodaß ein relativ großer Verlust an $I_{pix}$ auftritt. Als Pigment für grüne Leuchtstoffe aus kupfer-dotiertem Zinksulfid wurde in der JP 4-183777 Kobaltblau (Kobaltaluminat), in der JP 4-183778 $TiO_2.CoO.Al_2O_3$. LiO und in der JP 4-183779 Ultramarin vorgeschlagen. Diese blauen Pigmente verschieben die Farbkoordinaten des kupferdotierten Zinksulfids in den blauen Bereich, wodurch die Farbtreue der Bildwiedergabe vermindert wird.

Aus der US 4 086 123 ist ein Pigment bekannt, welches ein Zinksulfid-Wirtsgitter und wenigstens soviel eines metallsulfidhaltigen Dotierungsmittel enthält, daß die Farbe des Zinksulfides geändert wird. Als Dotierungsmittel können $Li_2S$, CaS, $Ga_2S_3$, $LiInS_2$, $LiInS_2$ und $CuInS_2$, $LiInS_2$ und $AgInS_2$, $LiInS_2$ und $Cr_2S_3$, $In_2S_3$ und $Cu_2O$, $In_2S_3$ und $Li_2O$, $Li_2S$ und MnS und $Cu_2S$ sowie Mischung daraus verwendet werden.

Es ist daher die Aufgabe der vorliegenden Erfindung, einen Farbbildschirm mit einem Pigment in der Bildschirmbeschichtung zu schaffen, der ein kontrastreiches Bild liefert, geringe Reflektanz für externes Licht besitzt, hohe Emissionsleuchtdichte und eine gute Emissionsfarbqualität aufweist sowie geringe Herstellungskosten verursacht.

Erfindungsgemäß wird die Aufgabe gelöst durch einen Farbbildschirm mit einer Bildschirmbeschichtung, die mindestens einen grünen und/oder einen roten Leuchtstoff und ein Pigment enthält der Zusammensetzung

$$Ga_a In_b Zn_c Al_d O_n S_m Se_o Te_p$$

wobei

| 0,05 < a < 1,95 | 0,0 ≤ n < 0,3 |
|---|---|
| 0,05 < b < 1,95 | 2,1 < m < 3 |
| 0,00 ≤ c < 0,09 | 0,0 ≤ o < 0,3 |
| 0,00 ≤ d < 0,2 | 0,0 ≤ p < 0,3 |

und n + m + o + p = 3 ist und a + b + 2/3 c + d = 2 ist.

Ein Farbbildschirm mit einer derartigen Pigmentierung des grünen und/oder roten Leuchtstoffes liefert ein kontrastreiches und reflexionsarmes Bild, weil die erfindungsgemäße Pigmentierung aufgrund ihrer Mischkristalleigenschaften in ihren Absorptionseigenschaften genau an das Emissionsspektrum des Leuchtstoffes angepaßt werden kann. Die Lage der Absorptionskanten kann durch Wahl der Zusammensetzung über den gesamten Bereich des sichtbaren Spektrums verschoben werden. Die Mischkristalle der Zusammensetzung $Ga_a In_b Zn_c Al_d O_n S_m Se_o Te_p$ zeichnen sich durch steile Absorptionskanten im gelborangen Spektralbereich und durch eine hohe Absorptivität aus. Daher können die pigmenthaltigen Schichten dünn und die Pigmentmenge klein gehalten werden. Die erfindungsgemäßen Pigmente sind einfach herzustellen; die Herstellungstechnologie ähnelt der der ZnS- Leuchtstoffe. Die Pigmente sind beständig gegen Elektronenstrahlung, haben einen sehr niedrigen Dampfdruck, eine ausreichende Temperaturbeständigkeit und sind nicht giftig.

Im Rahmen der vorliegenden Erfindung kann es bevorzugt sein, daß der Leuchtstoff eine Leuchtstoffbeschichtung, die das Pigment enthält, hat. Diese Leuchtstoffbeschichtung läßt sich leicht durch Copräzipitation direkt auf der Leuchtstoffoberfläche erzeugen.

Es kann aber auch bevorzugt sein, daß die Bildschirmbeschichtung mindestens eine Leuchtstoffschicht mit einem grünen und/oder roten Leuchtstoff und mindestens eine Farbfilterschicht mit dem Pigment enthält. Durch die Verwendung der Pigmente als nichtstreuende, ultrafeine Partikel mit Korngrößen im Nanometerbereich lassen sich transparente, separate Farbfilterschichten herstellen, die in ihrer Effektivität den pigmentbeschichteten Leuchtstoffen überlegen sind.

Ein weiterer Aspekt der Erfindung betrifft eine Leuchtstoffzubereitung, bei der der Leuchtstoff ein grüner und/oder ein roter Leuchtstoff ist und die Leuchtstoffbeschichtung ein Pigment der Zusammensetzung

$$Ga_a In_b Zn_c Al_d O_n S_m Se_o Te_p$$

wobei

| 0,05 < a < 1,95 | 0,0 ≤ n < 0,3 |
|---|---|
| 0,05 < b < 1,95 | 2,1 < m < 3 |
| 0,00 ≤ c < 0,09 | 0,0 ≤ o < 0,3 |
| 0,00 ≤ d < 0,2 | 0,0 ≤ p < 0,3 |

und n + m + o + p = 3 ist und a + b + 2/3 c + d = 2 ist, enthält.

Diese Leuchtstoffzubereitung bietet die Vorteile der Bandlückenabsorption in einem Mischkristallsystem mit steilen Absortionskanten, sehr starker Absorption und einstellbarer Farbe.

Es ist bevorzugt, daß der grüne Leuchtstoff die Zusammensetzung ZnS:Cu, Al, Au hat und das Pigment die Zusammensetzung

$$Ga_a In_b Zn_c Al_d O_n S_m Se_o Te_p$$

wobei

| 0,05 < a < 1,95 | 0,0 ≤ n < 0,3 |
|---|---|
| 0,05 < b < 1,95 | 2,1 < m < 3 |
| 0,00 ≤ c < 0,09 | 0,0 ≤ o < 0,3 |
| 0,00 ≤ d < 0,2 | 0,0 ≤ p < 0,3 |

und n + m + o + p = 3 ist und a + b + 2/3 c + d = 2 ist, hat.

Zusammen mit einem geeigneten blaugrünen Pigment bildet dies Pigment ein enges grünes Transmissionsfenster.

Es kann auch bevorzugt sein, daß der grüne Leuchtstoff die Zusammensetzung ZnS:Cu, Al hat und das Pigment die Zusammensetzung

$$Ga_a In_b Zn_c Al_d O_n S_m Se_o Te_p$$

wobei

| 0,05 < a < 1,95 | 0,0 ≤ n < 0,3 |
|---|---|
| 0,05 < b < 1,95 | 2,1 < m < 3 |
| 0,00 ≤ c ≤ 0,09 | 0,0 ≤ o ≤ 0,3 |
| 0,00 ≤ d ≤ 0,2 | 0,0 ≤ p ≤ 0,3 |

und n + m + o + p = 3 ist und a + b + 2/3 c + d = 2 ist, hat.

Es kann weiterhin bevorzugt sein, daß der Leuchtstoff ein roter Leuchtstoff ist und das Pigment die Zusammensetzung

$$Ga_a In_b Zn_c Al_d O_n S_m Se_o Te_p$$

wobei

| | |
|---|---|
| $0{,}05 < a < 1{,}95$ | $0{,}0 \leq n < 0{,}3$ |
| $0{,}05 < b < 1{,}95$ | $2{,}1 < m < 3$ |
| $0{,}00 \leq c < 0{,}09$ | $0{,}0 \leq o < 0{,}3$ |
| $0{,}00 \leq d < 0{,}2$ | $0{,}0 \leq p < 0{,}3$ |

und $n + m + o + p = 3$ ist und $a + b + 2/3\,c + d = 2$ ist, hat.

Es kann auch bevorzugt sein, daß der Leuchtstoff ein roter Leuchtstoff der Zusammensetzung $Y_2O_2S{:}Eu$ ist und das Pigment die Zusammensetzung

$$Ga_aIn_bZn_cAl_dO_nS_mSe_oTe_p$$

wobei

| | |
|---|---|
| $0{,}05 < a < 1{,}95$ | $0{,}0 \leq n < 0{,}3$ |
| $0{,}05 < b < 1{,}95$ | $2{,}1 < m < 3$ |
| $0{,}00 \leq c < 0{,}09$ | $0{,}0 \leq o < 0{,}3$ |
| $0{,}00 \leq d < 0{,}2$ | $0{,}0 < p < 0{,}3$ |

und $n + m + o + p = 3$ ist und $a + b + 2/3\,c + d = 2$ ist, hat.

Nachfolgend wird die Erfindung anhand von Beispielen und einer Zeichnung näher erläutert.

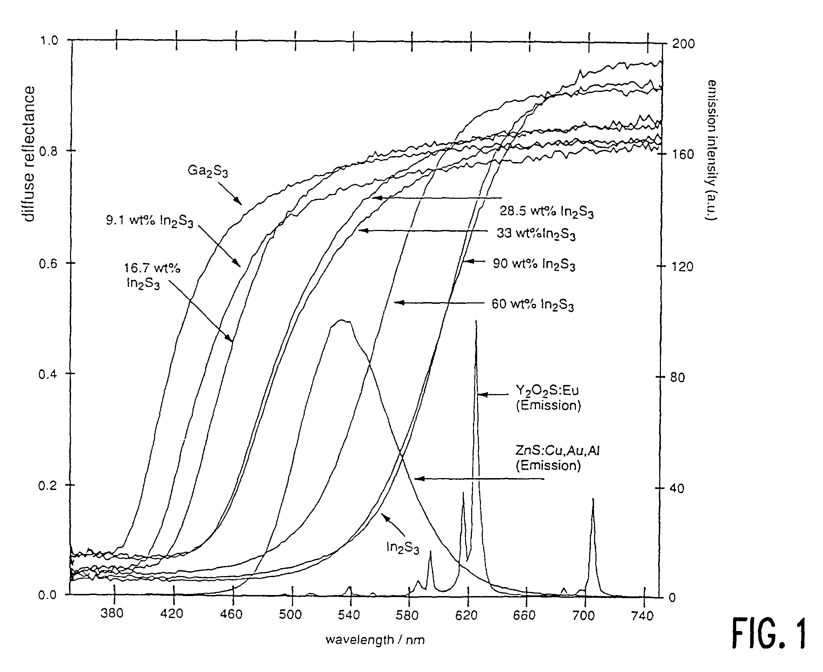

**Fig. 1** zeigt die Emissionsspektren des grünen Leuchtstoffes $ZnS{:}Cu,Au,Al$ und des roten Leuchtstoffes $Y_2O_2S{:}Eu$ sowie die Reflexionsspektren von erfindungsgemäßen Mischkristallpigmenten und außerdem zu Vergleichszwecken die Reflexionsspektren von reinem Galliumsulfid und reinem Indiumsulfid.

**Fig. 2** zeigt die Emissionsspektren des grünen Leuchtstoffes $ZnS{:}Cu,Au,Al$ und des roten Leuchtstoffes $Y_2O_2S{:}Eu$ sowie die Reflexionsspektren von zwei weiteren erfindungsgemäßen Mischkristallpigmenten.

Eine Farbbildröhre besteht aus der sog. Elektronenkanone mit dem Strahlungserzeugungs- und Strahlbündelungssystem für die drei Grundfarben Rot, Blau und Grün, weiterhin aus dem Strahlablenksystem und dem Farbbildschirm in einem evakuierten Glaskolben. Die Leuchtstoffbeschichtung befindet sich auf der Innenseite der Farbbildschirmfläche. Die Leuchtstoffbeschichtung besteht im allgemeinen aus mehreren Schichten. Die Schicht, die die Leuchtstoffe enthält, enthält diese in einem regelmäßigem Raster von Farbpunkten oder Farbstreifen, die bei Erregung durch einen Elektronenstrahl in ihren Grundfarben Rot, Grün, und Blau aufleuchten.

Das Pigment, das die Reflexion des Umgebungslichtes in dem Schirm reduzieren soll, kann in einer separaten Farbfilterschicht zwischen der Leuchtstoffschicht und dem Schirmglas oder aber als Beschichtung für die Leuchtstoffpartikel eingesetzt werden.

Der Beschichtungsaufbau der Farbbildschirmbeschichtung kann weiterhin noch eine Schwarzmatrixschicht sowie eine rückseitige Metallisierung umfassen.

Als grünemittierender Leuchtstoff für die erfindungsgemäße Farbbildröhre wird vorzugsweise wenigstens ein aus der folgenden Gruppe ausgewählter Leuchtstoff verwendet: Kupfer- und aluminiumaktiviertes Zinksulfid $ZnS{:}Cu,Al$; kupferaktiviertes Zinksulfid $ZnS{:}Cu$; kupfer- und aluminiumaktiviertes Zinkcadmiumsulfid $(Zn,Cd)S{:}Cu,Al$; wobei der Cadmiumsulfidanteil im Bereich von 1 bis 15 Gew.-% bezogen auf das Wirtsmaterial liegt; kupferaktiviertes Zinkcadmiumsulfid $(Zn,Cd)S{:}Cu$, wobei der Cadmiumsulfidanteil zwischen 0,1 und 10 Gew.-%, bezogen auf das Wirtsmaterial liegt; gold, kupfer- und aluminiumaktiviertes Zinksulfid $ZnS{:}Au,Cu,Al$ und silberaktiviertes Zinkcadmiumsulfid $(Zn,Cd)S{:}Ag$, wobei der Cadmiumsulfidanteil im Bereich von 30 bis 50 Gew.-% bezogen auf das Wirtsmaterial liegt. Der oben erwähnte $(Zn,Cd)S{:}Cu$-Leuchtstoff und der $ZnS$-$Cu$-Leuchtstoff können eine Spur Halogen enthalten. Der $ZnS{:}Au,Cu,Al$-Leuchtstoff kann Spuren von Halogen oder Wismut und/oder Antimon enthalten.

Weiterhin sind auch die schmalbandig emittierenden grünen Seltenerdmetall-Leuchtstoffe, beispielsweise terbiumaktiviertes $Y_2SiO_5{:}Tb$, $LaOBr{:}Tb$, $InBO_3{:}Tb$ und die terbiumaktivierten Granate, beispielsweise $Y_3Al_5O_{12}{:}Tb$ und $Y_3(Al,Ga)_5O_{12}{:}Tb$ geeignet.

Als rotemittierender Leuchtstoff für den erfindungsgemäßen Farbbildschirm wird vorzugsweise wenigstens einer aus der folgenden Gruppe ausgewählter Leuchtstoff verwendet: Europiumaktivierter Leuchtstoff auf Vanadat-, Borat-, Phosphat-, insbesondere aber Oxysulfid- oder Oxidbasis, z.B. $Y_2O_2S{:}Eu$; $Y_2O_3{:}Eu$ und $YVO_4{:}Eu$, sowie mit Europium aktiviertes Gadoliniumoxid $Gd_2O_3{:}Eu$ und mit Europium aktiviertes Gadoliniumoxysulfid $Gd_2O_2S{:}Eu$. Als weiterer rotemittierender Leuchtstoff eignet sich silberaktiviertes Zinkcadmiumsulfid $(Zn,Cd)S{:}Ag$ mit hohen Cadmiumgehalt.

Das Pigment für die Leuchtsschirmbeschichtung besteht im wesentlichen aus Mischkristallen der Chalkogenide der Elemente Indium, Gallium, Zink und Aluminium, die durch die allgemeine Summenformel

$$Ga_aIn_bZn_cAl_dO_nS_mSe_oTe_p$$

definiert sind,

wobei

| | |
|---|---|
| $0{,}05 < a < 1{,}95$ | $0{,}0 \leq n < 0{,}3$ |
| $0{,}05 < b < 1{,}95$ | $2{,}1 < m \leq 3$ |
| $0{,}00 \leq c < 0{,}09$ | $0{,}0 \leq o < 0{,}3$ |
| $0{,}00 \leq d < 0{,}2$ | $0{,}0 < p < 0{,}3$ |

und $n + m + o + p = 3$ ist und $a + b + 2/3\,c + d = 2$ ist.

Diese Mischkristalle (engl. "solid solution") leiten sich von dem $In_2S_3/Ga_2S_3$ - Mischkristallsystem ab, das eine komplette Serie von pseudobinären Mischkristallen bildet. Die Kristallstruktur dieser Mischkristalle basiert auf einem Grundmuster von tetraederisch koordinierten Gallium- und Indiumatomen. Im einfachsten Fall entsteht dadurch eine Verbindung vom Zinkblende- oder Wurtzit-Typ, wobei bedingt durch die stöchiometrischen Verhältnisse etwa ein Drittel der Gitterplätze im Metalluntergitter frei bleibt. Die Leerstellen können eine statistische Verteilung bilden, sie können sich aber auch ordnen; die entstehnden Überstrukturen sind vielfältig und geben im allgemeinen auch zu leichten Verzerrungen des Grundgitters Anlaß. Im Falle des $Ga_2S_3$ wird dies Verhalten deutlich: Es existieren sowohl eine Wurtzit-Variante ($\beta$-$Ga_2S_3$, statistisch verteilte Leerstellen), eine Spalerit-Variante ($\gamma$-$Ga_2S_3$, statistisch verteilte Leerstellen) und eine leicht verzerrte Wurtzit-Variante mit Überstruktur ($\alpha$-$Ga_2S_3$, monoklin).

Im Falle des reinen $In_2S_3$ wird die überwiegend tetraedrische Koordination des Metalls in einem fehlgeordneten Spinellstruktur realisiert. Das $\beta$-$In_2S_3$ kristallisiert in der $\gamma$-$Al_2O_3$-Struktur, in der die S-Atome in einer kubisch-dichtesten Kugelpackung angeordnet sind und die Indiumatome statistisch verteilt die tetraedrischen und oktaedrischen Lücken besetzen.

Bedingt durch die Verwandschaft der Grundgitter und des vorherrschenden Motivs der vierfach koordinierten Metallatome sind über weite Bereiche binäre, ternäre und quaternäre, allgemein multiple Mischkristallphasen sowohl zwischen Galliumsulfid und Indiumsulfid, als auch Aluminiumoxid, Aluminiumsulfid und den verwandten II-VI-Materialien wie insbesondere ZnS, aber auch ZnO, ZnSe und ZnTe möglich.

Die formal stets vorhandenen Leerstellen in der Mischkristallstruktur der erfindungsgemäßen Pigmente geben neben der Mischkristallbildung auch Anlaß zu vielfältigen stabilen oder metastabilen Ordnungsphänomenen. In den Systemen zwischen II-VI-Materialien und III-VI-Materialien finden sich auch stabile Verbindungen, z.B. der Zusammensetzung $A^{II}B^{III}_2C_4$, deren Struktur ausgehend von den oben besprochenen Grundgittern durch Ordnung der Leerstellen und Verzerrung der Koordination beschrieben werden kann. Die vielfältigen Polytypen und weiteren Verbindungen, die in der Literatur beschrieben worden sind, kristallisieren allerdings nur sehr langsam und teilweise nur unter Zuhilfenahme von Transportmitteln für chemischen Transport, z.b. Jod oder Jodide. Ihre Bildung kann daher durch die unten beschriebenen Herstellungsverfahren für die erfindungsgemäßen Mischkristallpigmente vermieden werden.

Die Eigenschaften der erfindungsgemäßen Mischkristalle unterliegen der Mischungsregel, d.h. die Eigenschaften ändern sich kontinuierlich mit der Zusammensetzung. Dadurch ist es möglich, durch Wahl einer geeigneten Zusammensetzung die Lage der Absorptionskanten der Pigmente zu optimieren und das Absorptionsspektrum des Pigmentes flexibel auf die Emissionsbanden des jeweils eingesetzten Leuchtstoffes einzustellen. Speziell als Bestandteil eines Grünpigmentes soll so eine optimale Anpassung auch an schmalbandig emittierende Leuchtstoffe , z. B. terbiumaktivierter Leuchtstoffe wie $Y_2SiO_5$:Tb oder LaOBr:Tb u.ä. ermöglicht werden.

Durch Verwendung von zwei Pigmenten mit abgestimmtem Abstand ihrer Absorptionskanten kann auch ein Transmissionsfenster definiert werden. Insbesondere kann für schmalbandig emittierende Leuchtstoffe wie $Y_2SiO_5$:Tb oder LaOBr:Tb ein erfindungsgemäßes Pigment mit einem blaugrünen Pigment zu einem optimalen Grünpigment kombiniert werden.

Je nach Partikelgröße des Pigmentes sind die damit hergestellten Farbfilterschichten transparent oder nicht transparent.

Die Mischkristallpigmente werden durch Mischkristallbildung aus den Basisverbindungen $Ga_2S_3$ und $In_2S_3$, sowie gegebenenfalls von weiteren Komponenten wie ZnS, ZnSe, ZnTe, $Ga_2Se_3$, $Ga_2Te_3$, $In_2Se_3$, $In_2Te_3$, $Al_2S_3$ und $Al_2O_3$, hergestellt. Diese Ausgangsverbindungen bilden bei erhöhter Temperatur eine weitgehend lückenlose Serie von Mischkristallen. Das Ausgangsmaterial $\beta$-$Ga_2S_3$ entsteht durch geeignete Glühprozeduren aus frisch gefälltem $Ga_2S_3$ oder wird direkt durch Umsetzung aus den Elementen gewonnen. $In_2S_3$ wird auf dem gleichen Weg gewonnen.

Die Mischkristallpigmente können durch gemeinsame Fällung der Ausgangschalkogenide im gewünschten Molverhältnis aus wässriger Lösung oder durch Mischen und gemeinsamen Sintern der festen Ausgangschalkogenide gewonnen werden. Durch gemeinsames Glühen bei etwa 800°C entsteht das gewünschte Pigment. Für die Glühprozedur werden den vorgemischten Ausgangschalkogeniden etwa 50 Gew.-% Schwefel zugesetzt. Die genaue Schwefelmenge ist auf die gewählte Glühtemperatur und Glühzeit abzustimmen. Die Mischung wird sorgfältig homogenisiert und dann unter Sauerstoffausschluß geglüht. Dies geschieht in einfacher Art und Weise in einem halbseitig geschlossenen Quarzrohr , das auf der offenen Seite mit Aktivkohle oberhalb der Pigmentmischung gefüllt ist. Die Glühtemperatur beträgt typischerweise 800°C, kann jedoch im Zustandsbereich der gewünschten Phase variiert werden. Je nach Zusammensetzung der Mischung, Körnigkeit der Ausgangschalkogenide und der Homogenität der Mischung sind Glühzeiten zwischen wenigen Stunden und mehreren Tagen notwendig. Die Glühprozedur kann beschleunigt werden, wenn die Glühung einmal oder mehrfach unterbrochen wird, um die Mischung erneut zu homogenisieren.

Durch Variation der Parameter des Fällungs- und Glühprozesses kann die Morphologie der Pigmentpartikel innerhalb weiter Grenzen verändert werden. Die spektrale Flankensteilheit des erhaltenen Pigmentes hängt vom Kristallisationsgrad, von der Homogenität und der Konzentration von Kristalldefekten ab und ist daher mit von den Parametern der Glühprozedur, wie Glühzeiten, Glühtemperaturen, Atmosphäre, anwesende Verunreinigungen etc., abhängig.

Der erfindungsgemäße Farbbildschirm weist eine Beschichtung auf, die entweder mindestens eine Schicht mit einem pigmentierten Leuchtstoff oder mindestens eine Leuchtstoffschicht und mindestens eine Farbfilterschicht mit einem Farbfilterpigment enthält.

Zur Herstellung eines pigmentierten Leuchtstoffes wird eine, wenn nötig stabilisierte Suspension des betreffenden Leuchtstoffes in Wasser bereitet und der pH im basischen Bereich eingestellt. Des weiteren werden eine Suspension des Pigmentes in der gewünschten Menge sowie eine Suspension des eingesetzten Binders z.B Latices, Kasein, Gelatine oder ähnliche bekannte Bindemittel bereitgestellt. Nach dem Vermischen der Suspensionen bei hohem pH wird der pH in den sauren Bereich abgesenkt, um die Suspensionen zu destabilisieren. Dabei schlagen sich die Pigmente und der Binder auf der Oberfläche der Leuchstoffpartikel nieder. Das isolierte pigmentbeschichtete Leuchtstoffpulver wird sodann getrocknet und falls nötig einer dem gewählten Binder angemessenen Temperaturbehandlung zur Aushärtung des Binders unterzogen. Alternativ können die erfindungsgemäßen sulfidischen Pigment auch durch homogene Präzipitation mit Thioacetamid direkt auf der Oberfläche der Leuchtstoffpartikel ausgefällt werden.

Zur Herstellung des Farbbildschirms wird das Farbbildschirmglas gegebenenfalls zunächst mittels eines photolithographischen Verfahrens mit dem Muster einer Schwarzmatrix überzogen. Danach werden die Raster der drei Primärfarben Blau, Rot und Grün unter Benutzung von Suspensionen pigmentierter Leuchtstoffe in drei aufeinanderfolgenden photolithographischen Schritten nach den bekannten Verfahren aufgebracht. Alternativ können die Leuchtstoffe auch in einem Druckverfahren aufgebracht werden.

Im Fall des Einsatzes von Farbfilterschichten zwischen dem Farbbildschirmglas und den Leuchtstoffschichten werden die Leuchtstoffe nicht pigmentiert stattdessen wird gemeinsam mit dem Leuchtstoff oder in einem getrennten Schritt eine Schicht des erfindungsgemäßen Pigmentes derart auf dem Schirmglas aufgebracht, daß diese zwischen dem Schirmglas und dem entsprechenden Leuchtstoffraster positioniert wird. Das Auftragen kann photolithographisch unter Benutzung von Suspensionen der erfindungsgemäßen Farbfilterpigmente oder alternativ durch ein Druckverfahren erfolgen.

In allen Fällen wird die fertige, alle drei Farben und eventuelle Farbfilterschichten umfassende Farbbildschirmbeschichtung für normale Anwendungen in Farbfernsehröhren oder Farbmonitoren mit einem Aluminiumfilm auf der Rückseite versehen und schließlich zur fertigen Röhre montiert.

### Ausführungsbeispiel 1

Herstellung von $Ga_2S_3$ und $In_2S_3$

600 g $Ga_2O_3$ werden in 25%iger Salpetersäure in der Hitze gelöst. Die abgekühlte Lösung wird unter Rühren mit Ammoniak auf einen pH-Wert von 2.7 eingestellt. In die klare Lösung wird $H_2S$ eingeleitet, wobei der pH-Wert im Laufe der Fällung absinkt. Ist pH = 1.8 erreicht, wird mit Ammoniak auf pH = 2.7 zurückgestellt. Dieser Zyklus wird wiederholt, bis kein $Ga_2S_3$ mehr ausfällt. Nach dem Filtrieren, Waschen mit 0.04%iger Salpetersäure (pH =2) und Trocknen im Vakuum bei 130°C erhält man eine Ausbeute von 450 g $Ga_2S_3$.

Die Fällung von $In_2S_3$ erfolgt in analoger Weise, der pH- Bereich für die Fällung liegt jedoch zwischen pH = 1 und pH = 1,3.

### Ausführungsbeispiel 2

$In_2S_3$ mit 10 mol% $Ga_2S_3$

11.78 g rohes, frischgefälltes $Ga_2S_3$ werden innig mit 146.63 g frisch gefälltem, feinteiligen $In_2S_3$ sowie 16 g Schwefelpulver vermischt. Das Gemisch wird unter Sauerstoffausschluß (vorzugsweise in einem einseitig geschlossenen Quarzrohr, das auf der offenen Seite mit Aktivkohle gefüllt ist) 6h auf 800 °C erhitzt. Je nach dem Grad der Feinteiligkeit der Ausgangskomponenten und ihrer Vermischung kann auch eine längere Glühung erforderlich sein. Man erhält ein rotes Pulver mit $\beta$-$In_2S_3$-Struktur, dessen optische Absorptionskante verglichen mit reinem $\beta$-$In_2S_3$ um etwa 10 nm zum kurzwelligen Bereich hin verschoben ist. Es eignet sich insbesondere als Farbfilter in Zusammenstellung mit dem rot emittierenden Kathodenstrahlleuchtstoff $Y_2O_2S$:Eu.

### Ausführungsbeispiel 3

$In_2S_3$ mit 33 mol% % $Ga_2S_3$ ($Ga_2In_4S_9$)

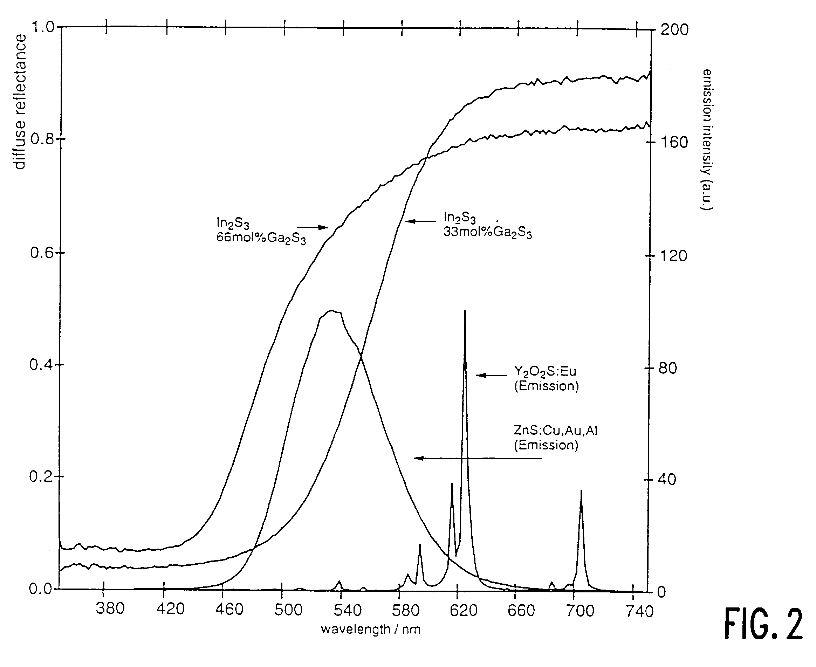

38.88 g rohes, frischgefälltes $Ga_2S_3$ werden innig mit 107.5 g frisch gefälltem, feinteiligen $In_2S_3$ sowie 15 g Schwefelpulver vermischt. Das Gemisch wird unter Sauerstoffausschluß (vorzugsweise in einem einseitig geschlossenen Quarzrohr, das auf der offenen Seite mit Aktivkohle gefüllt ist) 6h auf 800 °C erhitzt. Je nach dem Grad der Feinteiligkeit der Ausgangskomponenten und ihrer Vermischung kann auch eine längere Glühung erforderlich sein. Man erhält ein orangefarbenes Pulver mit der Struktur der (bekannten) Verbindung $Ga_2In_4S_9$, dessen optische Absorptionskante verglichen mit reinem $\beta$-$In_2S_3$ um etwa 45 nm zum kurzwelligen Bereich hin verschoben ist. Es eignet sich insbesondere als Farbfilter in Zusammenstellung mit rot emittierenden Kathodenstrahlleuchtstoffen. Fig. 2 zeigt das entsprechende Spektrum der diffusen Reflektivität. Die exakte Lage der Absorptionskante läßt sich durch Variation des Gehaltes an $Ga_2S_3$ den Systemanforderungen anpassen.

Ausführungsbeispiel 5

$In_2S_3$ mit 66 mol % $Ga_2S_3$

77.76 g rohes, frischgefälltes $Ga_2S_3$ werden innig mit 53.76 g frisch gefälltem, feinteiligen $In_2S_3$ sowie 13 g Schwefelpulver vermischt. Das Gemisch wird unter Sauerstoffausschluß (vorzugsweise in einem einseitig geschlossenen Quarzrohr, das auf der offenen Seite mit Aktivkohle gefüllt ist) 6h auf 800 °C erhitzt. Je nach dem Grad der Feinteiligkeit der Ausgangskomponenten und ihrer Vermischung kann auch eine längere Glühung erforderlich sein. Man erhält ein gelbes Pulver mit der Struktur des $\alpha$-$Ga_2S_3$, dessen optische Absorptionskante verglichen mit reinem $\beta$-$In_2S_3$ um etwa 110 nm zum kurzwelligen Bereich hin verschoben ist. Es eignet sich insbesondere als Farbfilter in Zusammenstellung mit grün emittierenden Kathodenstrahlleuchtstoffen wie z.B. $ZnS:Cu,Au,Al$ oder $Y_2SiO_5:Tb$. Fig.2 zeigt das entsprechende Spektrum der diffusen Reflektivität. Die exakte Lage der Absorptionskante läßt sich durch Variation des Gehaltes an $Ga_2S_3$ den Systemanforderungen anpassen.

**Patentansprüche**

1. Farbbildschirm mit einer Bildschirmbeschichtung, die mindestens einen grünen und/oder einen roten Leuchtstoff und mindestens ein Pigment der Zusammensetzung

$$Ga_a In_b Zn_c Al_d O_n S_m Se_o Te_p$$

wobei

| | |
|---|---|
| $0.05 < a < 1.95$ | $0.0 \leq n < 0.3$ |
| $0.05 < b < 1.95$ | $2.1 < m < 3$ |
| $0.00 \leq c < 0.09$ | $0.0 \leq o < 0,3$ |
| $0.00 \leq d < 0.2$ | $0.0 \leq p < 0.3$ |

und $n + m + o + p = 3$ ist und $a + b + 2/3 c + d = 2$ ist, enthält.

2. Farbbildschirm nach Anspruch 1,
   dadurch gekennzeichnet,
   daß der Leuchtstoff eine Leuchtstoffbeschichtung, die das Pigment enthält, hat.

3. Farbbildschirm nach Anspruch 1,
   dadurch gekennzeichnet,
   daß die Bildschirmbeschichtung mindestens eine Leuchtstoffschicht mit einem grünen und/oder rotem Leuchtstoff und mindestens eine Farbfilterschicht mit dem Pigment enthält.

4. Leuchtstoffzubereitung mit einem grünen und/oder rotem Leuchtstoff und einer Leuchtstoffbeschichtung mit einem Pigment der Zusammensetzung

$$Ga_a In_b Zn_c Al_d O_n S_m Se_o Te_p$$

wobei

| | |
|---|---|
| $0.05 < a < 1.95$ | $0.0 \leq n < 0.3$ |
| $0.05 < b < 1.95$ | $2.1 < m < 3$ |
| $0.00 \leq c < 0.09$ | $0.0 \leq o < 0.3$ |
| $0.00 \leq d < 0.2$ | $0 \leq p < 0.3$ |

und $n + m + o + p = 3$ ist und $a + b + 2/3 c + d = 2$ ist, enthält.

5. Leuchtstoffzubereitung nach Anspruch 4,
   dadurch gekennzeichnet,
   daß der Leuchtstoff ein grüner Leuchtstoff ist und die Leuchtstoffbeschichtung ein Pigment der Zusammensetzung

$$Ga_a In_b Zn_c Al_d O_n S_m Se_o Te_p$$

wobei

| | |
|---|---|
| $0.80 < a < 1.60$ | $0.0 \leq n < 0.3$ |
| $0.40 < b < 1.80$ | $2.1 < m < 3$ |
| $0.00 \leq c < 0.09$ | $0.0 \leq o < 0.3$ |
| $0.00 \leq d < 0.2$ | $0.0 \leq p < 0.3$ |

und $n + m + o + p = 3$ ist und $a + b + 2/3 c + d = 2$ ist enthält.

6. Leuchtstoffzubereitung nach Anspruch 5,
   dadurch gekennzeichnet,
   daß der grüne Leuchtstoff die Zusammensetzung $ZnS:Cu, Al, Au$ hat und das Pigment die Zusammensetzung

$$Ga_a In_b Zn_c Al_d O_n S_m Se_o Te_p$$

wobei

| | |
|---|---|
| $1.20 < a < 1.40$ | $0.0 \leq n < 0.3$ |
| $0.60 < b < 0.80$ | $2.1 < m < 3$ |
| $0.00 \leq c < 0.09$ | $0.0 \leq o < 0.3$ |
| $0.00 \leq d < 0.2$ | $0.0 \leq p < 0.3$ |

und $n + m + o + p = 3$ ist und $a + b + 2/3 c + d = 2$ ist, hat.

7. Leuchtstoffzubereitung nach Anspruch 5,

dadurch gekennzeichnet,
daß der grüne Leuchtstoff die Zusammensetzung ZnS:Cu, Al hat und das Pigment die Zusammensetzung

$$Ga_aIn_bZn_cAl_dO_nS_mSe_oTe_p$$

wobei

| | |
|---|---|
| $1.40 < a < 1.50$ | $0.0 \le n < 0.3$ |
| $0.50 < b < 0.60$ | $2.1 < m < 3$ |
| $0.00 \le c < 0.09$ | $0.0 \le o < 0.3$ |
| $0.00 \le d < 0.2$ | $0.0 \le p < 0.3$ |

und $n + m + o + p = 3$ ist und $a + b + 2/3\, c + d = 2$ ist, hat.

8. Leuchtstoffzubereitung nach Anspruch 4,
   dadurch gekennzeichnet,
   daß der Leuchtstoff ein roter Leuchtstoff ist und das Pigment die Zusammensetzung

$$Ga_aIn_bZn_cAl_dO_nS_mSe_oTe_p$$

wobei

| | |
|---|---|
| $0.05 < a < 1.60$ | $0.0 \le n < 0.3$ |
| $1.40 < b < 1.95$ | $2.1 < m < 3$ |
| $0.00 \le c < 0.09$ | $0.0 \le o < 0.3$ |
| $0.00 \le d < 0.2$ | $0.0 \le p < 0.3$ |

und $n + m + o + p = 3$ ist und $a + b + 2/3\, c + d = 2$ ist, hat.

9. Leuchtstoffzubereitung nach Anspruch 8,
   dadurch gekennzeichnet,
   daß der Leuchtstoff ein roter Leuchtstoff der Zusammensetzung $Y_2O_2S$:Eu ist und das Pigment die Zusammensetzung

$$Ga_aIn_bZn_cAl_dO_nS_mSe_oTe_p$$

wobei

| | |
|---|---|
| $0.05 < a < 0.25$ | $0.0 \le n < 0.3$ |
| $1.75 < b < 1.95$ | $2.1 < m < 3$ |
| $0.00 \le c < 0.09$ | $0.0 \le o < 0.3$ |
| $0.00 \le d < 0.2$ | $0.0 \le p < 0.3$ |

und $n + m + o + p = 3$ ist und $a + b + 2/3\, c + d = 2$ ist, hat.

**Claims**

1. A color display screen having a coating which comprises at least a green and/or a red phosphor as well as at least a pigment having the following composition:

$$Ga_aIn_bZn_cAl_dO_nS_mSe_oTe_p$$

wherein

| | |
|---|---|
| $0.05 < a < 1.95$ | $0.0 \le n < 0.3$ |
| $0.05 < b < 1.95$ | $2.1 < m < 3$ |
| $0.00 \le c < 0.09$ | $0.0 \le o < 0.3$ |
| $0.00 \le d < 0.2$ | $0.0 \le p < 0.3$ |

and $n + m + o + p = 3$ and $a + b + 2/3c + d = 2$.

2. A color display screen as claimed in Claim 1, characterized in that the phosphor has a phosphor coating which contains the pigment.

3. A color display screen as claimed in Claim 1, characterized in that the coating of the display screen comprises at least a phosphor layer containing a green and/or a red phosphor and at least a color-filter layer containing the pigment.

4. A phosphor preparation containing a green and/or a red phosphor and a phosphor coating containing a pigment having the composition

$$Ga_aIn_bZn_cAl_dO_nS_mSe_oTe_p$$

wherein

| | |
|---|---|
| $0.05 < a < 1.95$ | $0.0 \le n < 0.3$ |
| $0.05 < b < 1.95$ | $2.1 < m < 3$ |
| $0.00 \le c < 0.09$ | $0.0 \le o < 0.3$ |
| $0.00 \le d < 0.2$ | $0.0 \le p < 0.3$ |

and $n + m + o + p = 3$ and $a + b + 2/3c + d = 2$.

5. A phosphor preparation as claimed in Claim 4, characterized in that the phosphor is a green phosphor, and the phosphor coating contains a pigment having the composition

$$Ga_aIn_bZn_cAl_dO_nS_mSe_oTe_p$$

wherein

| | |
|---|---|
| $0.80 < a < 1.60$ | $0.0 \le n < 0.3$ |

(continued)

| 0.40 < b < 1.80 | 2.1 < m < 3 |
|---|---|
| 0.00 ≤ c < 0.09 | 0.0 ≤ o < 0.3 |
| 0.00 ≤ d < 0.2 | 0.0 ≤ p < 0.3 |

and $n + m + o + p = 3$ and $a + b + 2/3c + d = 2$.

6. A phosphor preparation as claimed in Claim 5, characterized in that the green phosphor has the composition ZnS:Cu,Al,Au and the pigment has the composition

$$Ga_a In_b Zn_c Al_d O_n S_m Se_o Te_p$$

wherein

| 1.20 < a < 1.40 | 0.0 < n < 0.3 |
|---|---|
| 0.60 < b < 0.80 | 2.1 < m < 3 |
| 0.00 ≤ c < 0.09 | 0.0 ≤ o < 0.3 |
| 0.00 ≤ d < 0.2 | 0.0 ≤ p < 0.3 |

and $n + m + o + p = 3$ and $a + b + 2/3c + d = 2$.

7. A phosphor preparation as claimed in Claim 5, characterized in that the green phosphor has the composition ZnS:Cu,Al, and the pigment has the composition

$$Ga_a In_b Zn_c Al_d O_n S_m Se_o Te_p$$

wherein

| 1.40 < a < 1.50 | 0.0 ≤ n < 0.3 |
|---|---|
| 0.50 < b < 0.60 | 2.1 < m < 3 |
| 0.00 ≤ c < 0.09 | 0.0 ≤ n < 0.3 |
| 0.00 ≤ d < 0.2 | 0.0 ≤ p < 0.3 |

and $n + m + o + p = 3$ and $a + b + 2/3c + d = 2$.

8. A phosphor preparation as claimed in Claim 4, characterized in that the phosphor is a red phosphor, and the pigment has the composition

$$Ga_a In_b Zn_c Al_d O_n S_m Se_o Te_p$$

wherein

| 0.05 < a < 1.60 | 0.0 ≤ n < 0.3 |
|---|---|
| 1.40 < b < 1.95 | 2.1 < m < 3 |
| 0.00 ≤ c < 0.09 | 0.0 ≤ o < 0.3 |
| 0.00 ≤ d < 0.2 | 0.0 ≤ p < 0.3 |

and $n + m + o + p = 3$ and $a + b + 2/3c + d = 2$.

9. A phosphor preparation as claimed in Claim 8, characterized in that the phosphor is a red phosphor having the composition $Y_2O_2S:Eu$, and the pigment has the composition

$$Ga_a In_b Zn_c Al_d O_n S_m Se_o Te_p$$

wherein

| 0.05 < a < 0.25 | 0.0 ≤ n < 0.3 |
|---|---|
| 1.75 < b < 1.95 | 2.1 < m < 3 |
| 0.00 ≤ c < 0.09 | 0.0 ≤ o < 0.3 |
| 0.00 ≤ d < 0.2 | 0.0 ≤ p < 0.3 |

and $n + m + o + p = 3$ and $a + h + 2/3c + d = 2$.

**Revendications**

1. Ecran en couleurs avec un revêtement d'écran qui contient au moins une matière luminescente verte et/ou une matière luminescente rouge et au moins un pigment de composition

$$Ga_a In_b Zn_c Al_d O_n S_m Se_o Te_p$$

dans laquelle

| 0,05 < a < 1,95 | 0,0 ≤ n < 0,3 |
|---|---|
| 0,05 < b < 1,95 | 2,1 < m < 3 |
| 0,00 ≤ c < 0,09 | 0,0 ≤ o < 0,3 |
| 0,00 ≤ d < 0,2 | 0.0 ≤ p < 0,3 |

et $n + m + o + p = 3$ et $a + b + 2/3 c + d = 2$.

2. Ecran en couleurs selon la revendication 1,
   caractérisé en ce
   que la matière luminescente est un revêtement de matière luminescente qui contient le pigment.

3. Ecran en couleurs selon la revendication 1,
   caractérisé en ce
   que le revêtement de l'écran contient au moins une couche luminescente avec une matière luminescente verte et/ou rouge et au moins une couche de filtre couleur avec le pigment.

4. Préparation de matière luminescente avec une matière luminescente verte et/ou une matière luminescente rouge et un revêtement de matière luminescente avec un pigment de composition

$$Ga_a In_b Zn_c Al_d O_n S_m Se_n Te_p$$

dans laquelle

| | |
|---|---|
| $0,05 < a < 1,95$ | $0,0 \leq n < 0,3$ |
| $0,05 < b < 1,95$ | $2,1 < m < 3$ |
| $0,00 \leq c < 0,09$ | $0,0 \leq o < 0,3$ |
| $0,00 \leq d < 0,2$ | $0,0 \leq p < 0,3$ |

et $n + m + o + p = 3$ et $a + b + 2/3\, c + d = 2$.

**5.** Préparation de matière luminescente selon la revendication 4,
caractérisée en ce
que la matière luminescente est une matière luminescente verte et que le revêtement de matière luminescente est un pigment de composition

$$Ga_a In_b Zn_c Al_d O_n S_m Se_o Te_p$$

dans laquelle

| | |
|---|---|
| $0,80 < a < 1,60$ | $0,0 \leq n < 0,3$ |
| $0,40 < b < 1,80$ | $2,1 < m < 3$ |
| $0,00 \leq c < 0,09$ | $0,0 \leq o < 0,3$ |
| $0,00 \leq d < 0,2$ | $0,0 \leq p < 0,3$ |

et $n + m + o + p = 3$ et $a + b + 2/3\, c + d = 2$.

**6.** Préparation de matière luminescente selon la revendication 5,
caractérisée en ce
que la matière luminescente verte répond à la composition ZnS :Cu,Al,Au et le pigment présente la composition

$$Ga_a In_b Zn_c Al_d O_n S_m Se_o Te_p$$

dans laquelle

| | |
|---|---|
| $1,20 < a < 1,40$ | $0,0 \leq n < 0,3$ |
| $0,60 < b < 0,80$ | $2,1 < m < 3$ |
| $0,00 \leq c < 0,09$ | $0,0 \leq o < 0,3$ |
| $0,00 \leq d < 0,2$ | $0,0 \leq p < 0,3$ |

et $n + m + o + p = 3$ et $a + b + 2/3\, c + d = 2$.

**7.** Préparation de matière luminescente selon la revendication 5,
caractérisée en ce
que la matière luminescente verte répond à la composition ZnS :Cu,Al et le pigment présente la composition

$$Ga_a In_b Zn_c Al_d O_n S_m Se_n Te_p$$

dans laquelle

| | |
|---|---|
| $1,40 < a < 1,50$ | $0.0 \leq n < 0,3$ |
| $0,50 < b < 0,60$ | $2,1 < m < 3$ |
| $0,00 \leq c < 0,09$ | $0,0 \leq o < 0,3$ |
| $0,00 \leq d < 0,2$ | $0,0 \leq p < 0,3$ |

et $n + m + o + p = 3$ et $a + b + 2/3\, c + d = 2$.

**8.** Préparation de matière luminescente selon la revendication 4,
caractérisée en ce
que la matière luminescente est une matière luminescente rouge et que le pigment répond à la composition

$$Ga_a In_b Zn_c Al_d O_n S_m Se Te_p$$

dans laquelle

| | |
|---|---|
| $0,05 < a < 1,60$ | $0,0 \leq n < 0,3$ |
| $1,40 < b < 1,95$ | $2,1 < m < 3$ |
| $0,00 \leq c < 0,09$ | $0,0 \leq o < 0,3$ |
| $0,00 \leq d < 0,2$ | $0,0 \leq p < 0,3$ |

et $n + m + o + p = 3$ et $a + b + 2/3\, c + d = 2$.

**9.** Préparation de matière luminescente selon la revendication 4,
caractérisée en ce
que la matière luminescente est une matière luminescente rouge de composition $Y_2O_2S$ :Eu et que le pigment répond à la composition

$$Ga_a In_b Zn_c Al_d O_n S_m Se_o Te_p$$

dans laquelle

| | |
|---|---|
| $0,05 < a < 0,25$ | $0,0 \leq n < 0,3$ |
| $1,75 < b < 1,95$ | $2,1 < m < 3$ |
| $0,00 \leq c < 0,09$ | $0,0 \leq o < 0,3$ |
| $0,00 \leq d < 0,2$ | $0,0 \leq p < 0,3$ |

et $n + m + o + p = 3$ et $a + b + 2/3\, c + d = 2$.

FIG. 1

emission intensity (a.u.)

diffuse reflectance

wavelength / nm

Ga₂S₃
9.1 wt% In₂S₃
16.7 wt% In₂S₃
28.5 wt% In₂S₃
33 wt% In₂S₃
90 wt% In₂S₃
60 wt% In₂S₃
Y₂O₂S:Eu (Emission)
ZnS:Cu,Au,Al (Emission)
In₂S₃

FIG. 2

EP 0 778 328 B1